# EUROPEAN PATENT APPLICATION

(11) **EP 4 818 497 A1**
(43) Date of publication of application: **07.10.2026**
(21) Application number: 26166937.8
(22) Date of filing: 23.03.2026
(51) Int. Cl.: F02C 7/36

(54) **TWO-SPEED EPICYCLIC GEARBOX WITH CLUTCH FOR AIRCRAFT PROPULSION SYSTEM**

(30) Priority: 21.03.2025 US 202519086945
(71) Applicant: Pratt & Whitney Canada Corp., Longueuil, Québec J4G 1A1 (CA)
(72) Inventor: MENHEERE, Dave, (01BE5) Longueuil, J4G 1A1 (CA); STRATTON, Russell, (01BE5) Longueuil, J4G 1A1 (CA)
(74) Representative: Dehns

(57) **Abstract**

An aircraft propulsion system includes a thermal engine, a gearbox (36), and a multiplate clutch. The gearbox (36) includes an input shaft (46), an output shaft (48), an epicyclic gear arrangement (42), a drive gear (44), and a first layshaft assembly (50). The multiplate clutch is engaged with the first layshaft assembly (50). The epicyclic gear arrangement includes a sun gear (54), a plurality of planet gears (56), and a ring gear (60). The first layshaft assembly (50) includes a first layshaft, a first layshaft input gear (70), and a first layshaft ring engagement gear (72). The first layshaft ring engagement gear (72) is engaged with the ring gear (60), and the first layshaft input gear (70) is engaged with the drive gear (44) and the input shaft (46). The multiplate clutch is disposable in a disengaged configuration and in an engaged configuration.

## Description

### BACKGROUND OF THE INVENTION

### 1. Technical Field

The present invention relates to aircraft propulsion systems in general, and to aircraft propulsion system gearboxes in particular.

### 2. Background Information

Turboprop engines typically employ variable pitch propellers that permit the propeller pitch to be adjusted during phases of an aircraft mission. Typically, a high propeller speed is used in takeoff while a reduced propeller speed is used in a climb setting and a cruise setting to reduce cabin noise. A further reduced propeller speed may also be used at engine idle.

The power turbine of the turboprop engine is connected to the propeller and the speed of the power turbine may be dictated by the propeller. The efficiency of a power turbine is typically greatest at the maximum speed used in takeoff. Consequently, there may be an efficiency penalty associated with operating the power turbine at a lower than maximum speed, e.g., a reduced speed during a climb setting or a cruise setting.

What is needed is a system and method for a propeller driven aircraft that can provide an improved means of controlling propeller speed and power turbine speed.

### SUMMARY

According to an aspect of the present invention, an aircraft propulsion system is provided that includes a thermal engine, a gearbox, and a multiplate clutch. The gearbox includes an input shaft, an output shaft, an epicyclic gear arrangement, a drive gear, and a first layshaft assembly. The input shaft is driven by the thermal engine. The multiplate clutch is engaged with the first layshaft assembly. The epicyclic gear arrangement includes a sun gear, a plurality of planet gears, and a ring gear. The sun gear is connected with the drive gear. The first layshaft assembly extends along a first layshaft rotational axis and includes a first layshaft, a first layshaft input gear, and a first layshaft ring engagement gear. The first layshaft ring engagement gear is engaged with the ring gear, and the first layshaft input gear is engaged with the drive gear and the input shaft. The multiplate clutch is disposable in an disengaged configuration wherein the first layshaft ring engagement gear is uncoupled with the first layshaft input gear, and in an engaged configuration wherein the first layshaft ring engagement gear is coupled with the first layshaft input gear.

In any of the aspects or embodiments described above and herein, the multiplate clutch may include a first carriage, a second carriage, a plurality of clutch discs, a plurality of clutch plates, and an linear actuator.

In any of the aspects or embodiments described above and herein, the first carriage (FC) may include an FC hub that has an FC central bore that is configured to receive the first layshaft. The FC central bore and the first layshaft may be configured such that the first carriage and the first layshaft are rotationally coupled and the first carriage may be configured to axially translate relative to the first layshaft.

In any of the aspects or embodiments described above and herein, the FC central bore and the first layshaft may be disposed in a splined relationship.

In any of the aspects or embodiments described above and herein, the first carriage may include a collar, a base, and a collar flange. The collar may be disposed radially outside of the FC hub, and the base may extend radially between the collar and the FC hub.

In any of the aspects or embodiments described above and herein, the collar may include a first collar segment and a second collar segment and the collar flange may extend radially outward from the collar between the first collar segment and the second collar segment.

In any of the aspects or embodiments described above and herein, the second carriage (SC) may include a SC hub that has a SC central bore that is configured to receive the first layshaft, wherein the SC central bore and the first layshaft may be configured such that the second carriage and the first layshaft are not coupled.

In any of the aspects or embodiments described above and herein, the second carriage may include a web and a forward flange. The web may extend radially outward from the SC hub to a distal end, and the forward flange may extend axially away from the distal end of the web, disposed radially outside of at least a portion of the second collar segment.

In any of the aspects or embodiments described above and herein, the plurality of clutch discs and the plurality of clutch plates may be disposed in an annular disc/plate cavity. The web and the collar flange may form axial boundaries of the disc/plate cavity, and the forward flange and the second collar segment may form radial boundaries of the disc/plate cavity.

In any of the aspects or embodiments described above and herein, each clutch plate may be mechanically engaged with the first carriage, and each clutch disc may be mechanically engaged with the second carriage.

In any of the aspects or embodiments described above and herein, each clutch plate may be mounted to be axially translatable, and each clutch disc may be mounted to be axially translatable.

In any of the aspects or embodiments described above and herein, the multiplate clutch may include a linear actuator having a piston that is axially translatable between a deployed state and a non-deployed state. When the multiplate clutch is disposed in an disengaged configuration, the linear actuator may be disposed in the non-deployed state. When the multiplate clutch is disposed in an engaged configuration, the linear actuator may be disposed in the deployed state.

In any of the aspects or embodiments described above and herein, the linear actuator may be normally disposed in the non-deployed state.

In any of the aspects or embodiments described above and herein, the linear actuator may include a return spring configured to normally bias the piston in the non-deployed state.

In any of the aspects or embodiments described above and herein, the linear actuator may be configured so that the piston engages with and causes linear translation of the first carriage toward the second carriage during transition from the multiplate clutch disengaged configuration to the multiplate clutch engaged configuration.

In any of the aspects or embodiments described above and herein, in the multiplate clutch disengaged configuration the clutch discs and the clutch plates may not be rotationally coupled with one another.

In any of the aspects or embodiments described above and herein, in the multiplate clutch engaged configuration the clutch discs and the clutch plates may not be rotationally coupled with one another, and the linear actuator may maintain the clutch discs and the clutch plates rotationally coupled with one another.

In any of the aspects or embodiments described above and herein, the clutch discs and the clutch plates may be disposed in an alternating disc - plate arrangement.

In any of the aspects or embodiments described above and herein, the linear actuator may be hydraulically powered.

In any of the aspects or embodiments described above and herein, the thermal engine may be a gas turbine engine and an engine oil may be used to hydraulically power the linear actuator.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. The following description and drawings are intended to be exemplary in nature and non-limiting.

### BRIEF DESCRIPTION OF THE DRAWINGS

FIG. 1 is a diagrammatic sectional view of an exemplary gas turbine engine with a gearbox and a propulsion unit.
FIG. 2 is a diagrammatic perspective view of a present invention reduction gearbox embodiment.
FIG. 3 is a diagrammatic view of a present invention reduction gearbox embodiment.
FIG. 4 is a diagrammatic representation of a present invention epicyclic gear arrangement with the ring gear in a non-rotational mode.
FIG. 4A is a diagrammatic representation of a present invention epicyclic gear arrangement with the ring gear in a rotational mode.
FIG. 5 is a table illustrating an example of present invention two-speed gearbox operation.
FIG. 6 is a diagrammatic view of a present invention reduction gearbox embodiment.
FIG. 6A is a diagrammatic enlargement of the portion of the reduction gearbox embodiment shown in FIG. 6.
FIG. 7 is a diagrammatic perspective view of a present invention reduction gearbox embodiment.
FIG. 8 is an enlargement of the sectioned portion of the reduction gearbox embodiment shown in FIG. 7.
FIG. 9 is an exploded diagrammatic view of a plurality of clutch discs and a plurality of clutch plates.

### DETAILED DESCRIPTION

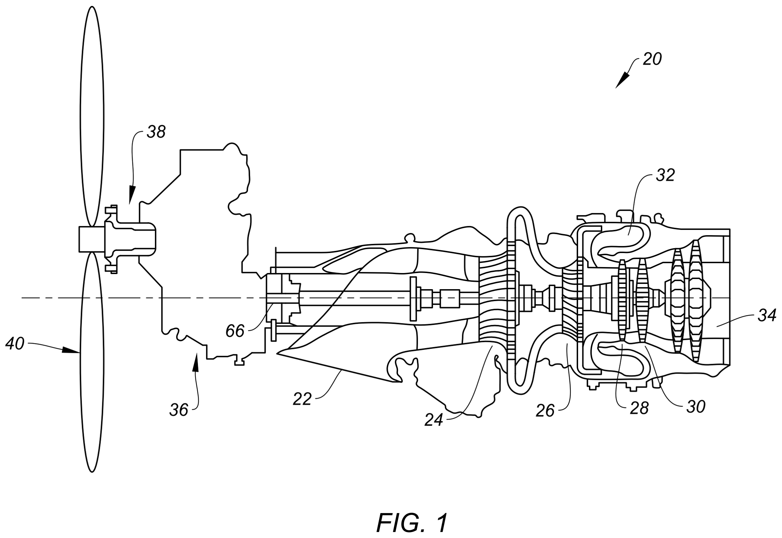

FIG. 1 is a diagrammatic cross-sectional view of gas turbine engine 20 that includes an inlet duct 22, a low pressure compressor 24, a high pressure compressor 26, a high pressure turbine 28, a low pressure turbine 30, and a combustor 32. The gas turbine engine 20 also includes a power turbine 34. The present invention is not limited to the gas turbine engine 20 shown in FIG. 1 and may be used with other gas turbine engine 20 configurations or other thermal engine configurations. The gas turbine engine 20 is in communication with a gearbox 36. The gearbox 36 is in communication with a propulsion unit 38 that includes a propeller 40. The present invention is not limited to use with propulsion units 38 that include propellers 40.

The gearbox 36 may assume different configurations. The term "gearbox" as used herein may refer to a reduction gearbox that is configured to accept an input rotational drive at a first rotational speed (S1) and at a first torque (T1) and produce an output rotational drive at a second rotational speed (S2) and at a second torque (T2), wherein the first rotational speed is greater than the second rotational speed (S1 > S2) and the second torque is greater than the first torque (T2 > T1).

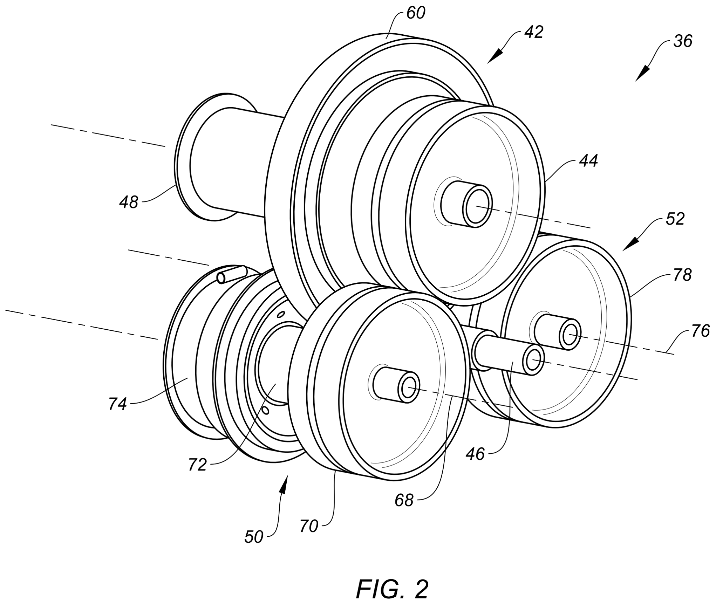

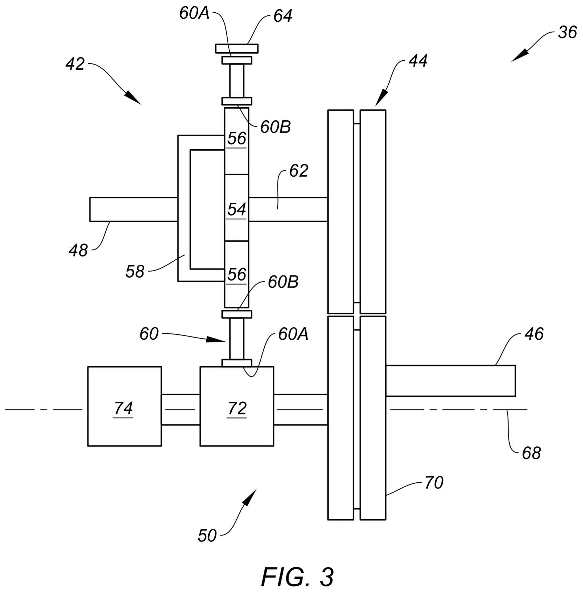

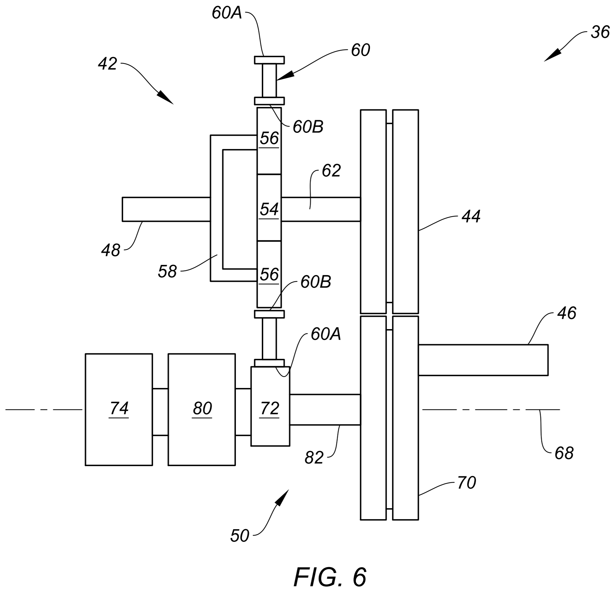

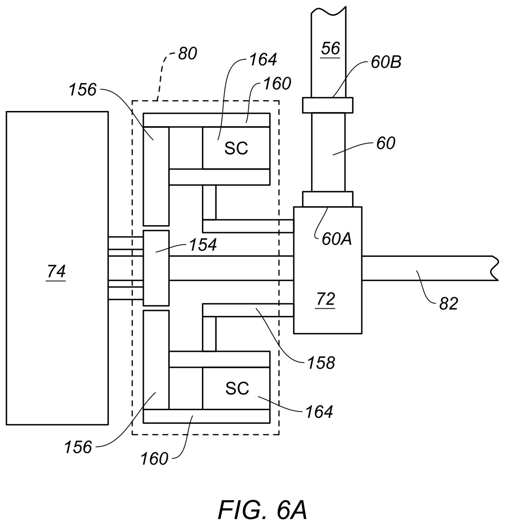

The present invention gearbox 36 embodiment diagrammatically shown in FIGS. 2 and 3 is a two-speed reduction gearbox 36 that includes an epicyclic gear arrangement 42, a drive gear 44, an input shaft 46, an output shaft 48, a first layshaft assembly 50, and a second layshaft assembly 52. As will be detailed herein, certain present invention embodiments may include the epicyclic gear arrangement 42 and include an epicyclic gear assembly 80 as part of a layshaft assembly; e.g., see FIG. 6. To avoid confusion within the present description, the epicyclic gear arrangement 42 will be referred to as the "output shaft epicyclic gear arrangement 42" or the "OS epicyclic gear arrangement 42", and the epicyclic gear assembly 80 associated with a layshaft assembly will be referred to as the "layshaft epicyclic gear arrangement 80" or the "LS epicyclic gear arrangement 80".

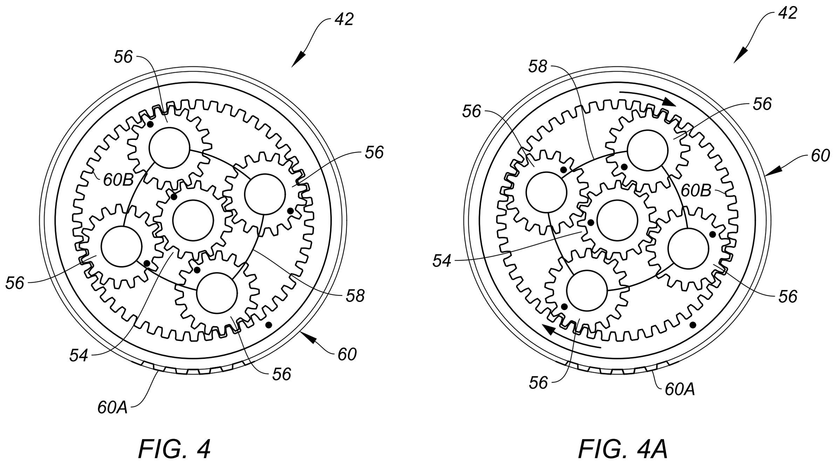

Referring to FIG. 3, the OS epicyclic gear arrangement 42 includes a sun gear 54, a plurality of planet gears 56, a carrier 58, and a ring gear 60. A shaft 62 connects the sun gear 54 to the drive gear 44. A ring gear rotational control device 64 is shown in FIG. 3. The ring gear 60 has an outer diameter surface 60A configured with gear teeth, and an inner diameter surface 60B configured with gear teeth. The sun gear 54 is engaged with the planet gears 56 and the planet gears 56 are engaged with the gear teeth disposed on the inner diameter surface 60B of the ring gear 60. In the OS epicyclic gear arrangement 42 diagrammatically shown in FIGS. 4 and 4A, four planet gears 56 are shown engaged with the sun gear 54 and the ring gear 60. The present invention is not limited to any particular number of planet gears 56 in the OS epicyclic gear arrangement 42. The carrier 58 of the OS epicyclic gear arrangement 42 is connected to each of the planet gears 56 and is connected to the output shaft 48 of the gearbox 36. The output shaft 48 may be directly or indirectly connected to the propulsion unit 38; e.g., see FIG. 1. An example of a gearbox output shaft 48 that is directly engaged with the propulsion unit 38 is one wherein the gearbox output shaft 48 and the drive elements of the propulsion unit 38 (e.g., the propeller shaft) are connected to one another and rotate at the same speed. An example of a gearbox output shaft 48 that is indirectly engaged with the propulsion unit 38 is one wherein the gearbox output shaft 48 and the drive elements of the propulsion unit 38 (e.g., the propeller shaft) are both connected to a gear arrangement and the engine shaft and gearbox input shaft 46 rotate at different rotational speeds.

The ring gear rotational control device 64 is configured to allow the ring gear 60 to rotate in a first direction and to prevent the ring gear 60 from rotating in an opposite second direction. A Sprag clutch is an example of a device that can be used as a ring gear rotational control device 64. The present invention is not limited to using a Sprag clutch as a ring gear rotational control device 64. For example, in some embodiments a ring gear rotational control device 64 may be configured to allow the ring gear 60 to rotate when a predetermined condition exists (e.g., when a layshaft ring engagement gear is engaged to drive the ring gear) and to not allow the ring gear 60 to rotate when a predetermined condition exists (e.g., when a layshaft ring engagement gear is disengaged with the ring gear). Examples of how a layshaft ring engagement gear may be engaged with, or disengaged from, a ring gear are described herein.

The gearbox input shaft 46 is directly or indirectly engaged with, and is driven by, the gas turbine engine 20. An example of a gearbox input shaft 46 that is directly engaged with the gas turbine engine 20 is one wherein the gearbox input shaft 46 is connected to an engine shaft and rotates at the same speed as the engine shaft. An example of a gearbox input shaft 46 that is indirectly engaged with the gas turbine engine 20 is one wherein the gearbox input shaft 46 and the engine shaft are both connected to a gear arrangement (not shown) and the engine shaft and gearbox input shaft 46 rotate at different rotational speeds. In the gas turbine engine 20 shown in FIG. 1, a shaft 66 extending from the power turbine 34 is an example of an engine shaft that may be directly or indirectly engaged with the gearbox input shaft 46. As will be detailed herein, the first layshaft assembly 50 and the second layshaft assembly 52 (see FIG. 2) are engaged with the gearbox input shaft 46.

The first layshaft assembly 50 is disposed along a first layshaft rotational axis 68 and includes a first layshaft input gear 70, a first layshaft ring engagement gear 72, and a first clutch 74. The first layshaft input gear 70 is engaged with the gearbox input shaft 46. The first layshaft ring engagement gear 72 is engaged with the ring gear 60 of the OS epicyclic gear arrangement 42 and is in communication with the first clutch 74. The first clutch 74 is disposable in a "clutch-engaged" configuration or in a "clutch-disengaged" configuration. In the clutch-engaged configuration, the first clutch 74 couples the first layshaft ring engagement gear 72 with the first layshaft input gear 70. Hence, in the clutch-engaged configuration, the first layshaft ring engagement gear 72 is driven via the first layshaft input gear 70 and the gearbox input shaft 46, and the first layshaft ring engagement gear 72 drives the ring gear 60 of the OS epicyclic gear arrangement 42. In the clutch-disengaged configuration, the first clutch 74 does not couple the first layshaft ring engagement gear 72 and the first layshaft input gear 70, and consequently the first layshaft ring engagement gear 72 is not driven.

In some embodiments, the second layshaft assembly 52 may be configured substantially the same as the first layshaft assembly 50; e.g., configured such that the second layshaft assembly 52 is disposed along a second layshaft rotational axis 76 and includes a second layshaft input gear 78, a second layshaft ring gear (not shown), and a second clutch (not shown). The second layshaft input gear 78 is engaged with the gearbox input shaft 46 and the second layshaft ring gear is engaged with the ring gear 60 of the OS epicyclic gear arrangement 42 and is in communication with the second clutch. The second clutch is disposable in a disengaged configuration or in an engaged configuration; e.g., like the first clutch 74.

In some embodiments, the second layshaft assembly 52 may be configured substantially the same as the first layshaft assembly 50 but without a clutch. In the absence of a clutch, the second layshaft ring gear may be engaged with the ring gear 60 of the OS epicyclic gear arrangement 42 as an idler gear.

As detailed herein, gas turbine engines (e.g., a turboprop) very often have an range of rotational speeds in which the engine 20 has desirable efficiency and a range of rotational speeds in which the engine 20 has less than desirable efficiency. In many instances, it is desirable to have a propeller rotational speed that is less than the rotational speed of the engine 20 powering the propeller.

Embodiments of the present invention two-speed gearbox 36 provide a structure that allows the gas turbine engine 20 to operate in a rotational speed range that is beneficial (e.g., efficient) for the gas turbine engine 20 and allows the propulsion system (e.g., the propeller) to be driven in a rotational speed range that provides a desired amount of thrust and an acceptable level of noise.

During the operation of a gas turbine engine 20 with a propulsion unit 38 and a present invention two-speed gearbox 36, the gas turbine engine 20 drives the input shaft 46 of the gearbox 36. As indicated herein, a power turbine shaft 66 may directly or indirectly provide drive to the input shaft 46 of the gearbox 36. The input shaft 46 of the gearbox 36, in turn, drives the first and second layshaft assemblies; i.e., drives the first layshaft input gear 70 and the second layshaft input gear 78.

As detailed herein, the present invention two-speed gearbox 36 may be operated in a first mode (e.g., a "low-speed mode") or in a second mode (e.g., a "high-speed mode"). In a turboprop application, it may be desirable to operate the gearbox 36 in a low-speed mode during certain flight segments when a lower propeller speed may be desirable; e.g., during a climb segment or a cruise segment. In a turboprop application, it may also be desirable to operate the gearbox 36 in a high-speed mode during certain flight segments when a higher propeller speed may be desirable; e.g., during a takeoff segment. In both modes, the input shaft 46 of the gearbox 36 drives the first and second layshaft input gears 70, 78 and the first and second layshaft input gears 70, 78, in turn, drive the drive gear 44. The drive gear 44 is connected by shaft 62 with the sun gear 54 of the OS epicyclic gear arrangement 42. Hence, in the first mode and the second mode, the drive gear 44 is driven and the drive gear 44, in turn, drives the sun gear 54, planet gears 56, and carrier 58 of the OS epicyclic gear arrangement 42.

As described herein, the first layshaft assembly 50, or the second layshaft assembly 52, or both may include a clutch 74 disposable in a clutch-engaged configuration or in a clutch-disengaged configuration. To facilitate the description herein, the operation of the present invention will be described hereinafter in terms of only the first layshaft assembly 50 having a clutch 74 unless otherwise indicated. To be clear, the present invention is not limited to only the first layshaft assembly 50 having a clutch 74.

In the first mode, the first layshaft clutch 74 is disposed in the clutch-disengaged configuration. The first layshaft ring engagement gear 72 is not coupled with the first layshaft input gear 70. The first layshaft ring engagement gear 72 is, therefore, not driven and therefore does not drive the ring gear 60 of the OS epicyclic gear arrangement 42. The gas turbine engine 20 (e.g., the power turbine shaft 66) drives the gearbox input shaft 46 and the gearbox input shaft 46 drives both the first and second layshaft assemblies 50, 52; i.e., drives the first layshaft input gear 70 and the second layshaft input gear 78. The first and second layshaft input gears 70, 78, in turn, drive the drive gear 44. The drive gear 44 is connected to the sun gear 54 of the OS epicyclic gear arrangement 42. The first and second layshaft input gears 70, 78 drive the drive gear 44, and the drive gear 44 drives the sun gear 54, planet gears 56, and carrier 58 of the OS epicyclic gear arrangement 42. The carrier 58 drives the gearbox output shaft 48, which in turn drives the propulsion unit 38.

As detailed herein, the ring gear rotational control device 64 is configured to allow the ring gear 60 to rotate in a first direction and to prevent the ring gear 60 from rotating in an opposite second direction. In the first mode, the ring gear rotational control device 64 prevents the ring gear 60 from rotating.

In the second mode, the clutch 74 is disposed in the clutch-engaged configuration wherein the clutch 74 couples the first layshaft ring engagement gear 72 with the first layshaft input gear 70. Hence, in the clutch-engaged configuration, the first layshaft ring engagement gear 72 is driven via the first layshaft input gear 70. The first layshaft ring engagement gear 72, in turn, drives the ring gear 60 of the OS epicyclic gear arrangement 42. It should be noted that the ring gear rotational control device 64 does not prevent the first layshaft ring engagement gear 72 from driving the ring gear 60 of the OS epicyclic gear arrangement 42. The first layshaft ring engagement gear 72 driving the ring gear 60 causes the ring gear 60 to rotate, and the rotation of the ring gear 60 causes the carrier 58 of the OS epicyclic gear arrangement 42 to rotate faster than it would if the ring gear 60 was stationary. As a result, in the second mode power is transmitted to the output shaft 48 of the gearbox 36 along a first path via the first and second layshaft input gears 70, 78 driving the drive gear 44, and the drive gear 44 driving the OS epicyclic gear arrangement 42, and along a second path via the first layshaft ring engagement gear 72 of the first layshaft assembly 50 driving the ring gear 60 of the OS epicyclic gear arrangement 42. Exactly how much of the power transferred to the gearbox output shaft 48 is transferred along the first path and how much along the second path will depend on the overall gear ratio of the gears within the gearbox 36. It is understood that a ratio of approximately 4:1 (first path : second path) is representative of what would work in many applications. In this example, twenty percent (20%) of the power transferred from the gas turbine engine 20 to the propulsion unit 38 would be transferred through the clutched first layshaft assembly 50. Moreover, the present invention two-speed gearbox 36 allows the gas turbine engine 20 to be operated in a rotational speed range that is beneficial for the gas turbine engine 20 and allows the propulsion system (e.g., the propeller) to be driven in a desirable rotational speed range.

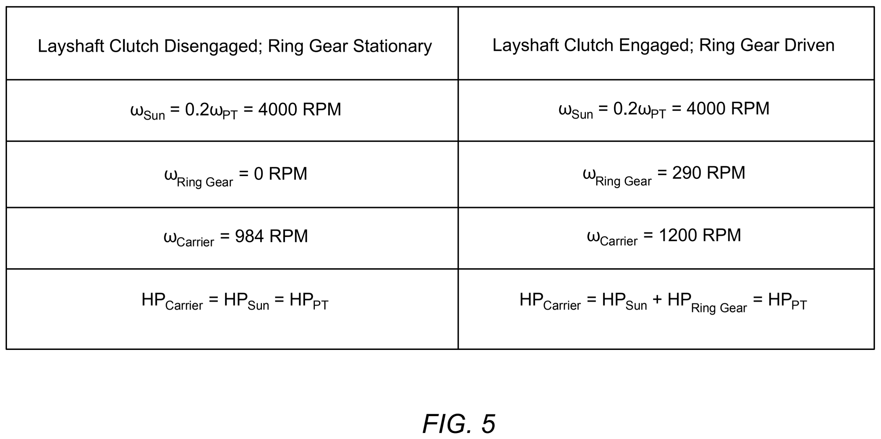

The table shown in FIG. 5 provides an illustration of the differences between the present invention two-speed gearbox 36 operating in the first mode (e.g., the "low-speed mode") or in the second mode (e.g., the "high-speed mode"). The data in the table is provided to illustrate an example and is not intended to be limiting.

As indicated herein, the operation of the present invention is described above in terms of only the first layshaft assembly 50 having a clutch 74, but the present invention is not limited to only one layshaft assembly having a clutch. Present invention embodiments wherein each layshaft assembly 50, 52 includes a clutch can provide substantial benefits. For example, when both the first and second layshaft assemblies 50, 52 have a clutch, the system is provided with desirable redundancy and more operational modes; e.g., operate a single clutch, switch from operating a first clutch 74 to operating a second clutch, operate the clutches together, and the like. As another example, if the ring gear rotational control device 64 is inoperable, one of the clutched layshaft assemblies can control the rotation of ring gear 60 of the OS epicyclic gear arrangement 42.

In the first mode (e.g., the "low-speed mode") described above, the ring gear 60 of the OS epicyclic gear arrangement 42 remains stationary and in the second mode (e.g., the "high-speed mode"), the ring gear 60 of the OS epicyclic gear arrangement 42 is rotationally driven. In both of these modes, the carrier 58 of the OS epicyclic gear arrangement 42 is rotationally driven and the carrier 58 in turn drives the output shaft 48 of the gearbox 36. In an alternative configuration, the output shaft 48 of the gearbox 36 could be driven by the ring gear 60 of the OS epicyclic gear arrangement 42 and rotation of the carrier 58 could be controlled to achieve the low-speed mode and the high-speed mode. For example, in a first mode (e.g., the "low-speed mode") of this embodiment, the carrier 58 of the OS epicyclic gear arrangement 42 may remain stationary and the ring gear 60 rotates, and in a second mode (e.g., the "high-speed mode"), the carrier 58 may be rotationally driven by one or both layshaft assemblies; e.g., by the first layshaft assembly 50.

In yet another alternative configuration, the ring gear 60 of the OS epicyclic gear arrangement 42 may be maintained in a high-speed mode with the layshaft assembly clutch(es) 74 in a clutch-disengaged configuration. In this configuration, the low-speed mode would include the layshaft assembly clutch(es) 74 disposed in a clutch-engaged configuration, driving the OS epicyclic gear arrangement 42 ring in a manner that slows the rotational speed of the carrier 58. The ring gear rotational control device 64 is configured to allow the ring gear 60 to be driven in a first direction and to prevent the ring gear 60 from rotating in an opposite second direction.

In some present invention embodiments, a layshaft assembly that includes a clutch may also include a epicyclic gear assembly; i.e., an LS layshaft epicyclic gear arrangement 80. Embodiments of the LS epicyclic gear assembly can provide a geared speed reduction for a layshaft that is physically compact.

FIG. 6 is a diagrammatic representation of a present invention two-speed gearbox 36 embodiment that includes an OS epicyclic gear arrangement 42, an drive gear 44, an input shaft 46, an output shaft 48, a first layshaft assembly 50, and a second layshaft assembly 52. The second layshaft assembly 52 is not shown in the diagrammatic gearbox 36 representation shown in FIG. 6. However, the first and second layshaft assemblies may be oriented as shown in FIG. 2.

The first layshaft assembly 50 is disposed along the first layshaft rotational axis 68 and includes a first layshaft 82, a first layshaft input gear 70, a first layshaft ring gear, a first LS epicyclic gear arrangement 80, and a first clutch 74. The first layshaft input gear 70 is engaged with the gearbox input shaft 46 and is mounted on the first layshaft 82. The first layshaft ring engagement gear 72 is engaged with the ring gear 60 of the OS epicyclic gear arrangement 42. The first LS epicyclic gear arrangement 80 and the first clutch 74 are in communication with the first layshaft 82.

To facilitate the description herein, FIG. 6A is a diagrammatic enlargement of the portion of the first layshaft assembly 50 that includes the first layshaft ring engagement gear 72, the first LS epicyclic gear arrangement 80, and the first clutch 74. A portion of the ring gear 60 of the OS epicyclic gear arrangement 42 is shown engaged with the first layshaft ring engagement gear 72.

The first LS epicyclic gear arrangement 80 includes an FL sun gear 154, a plurality of FL planet gears 156, an FL carrier 158, and an FL ring gear 160. The first layshaft 82 extends through the FL sun gear 154, but the FL sun gear 154 is not fixed to the first layshaft 82. The first layshaft 82 is in communication with the first clutch 74. The FL sun gear 154 is engaged with the FL planet gears 156 and the FL planet gears 156 are engaged with the FL ring gear 160. The first LS epicyclic gear arrangement 80 is not limited to any particular number of FL planet gears 156 other than two or more. The FL ring gear 160 is mounted so as to be stationary relative to the FL planet gears 156. The FL carrier 158 extends between the PL planet gears 156 and the first layshaft ring engagement gear 72. Alternatively, the FL carrier 158 may be stationary, the FL sun gear 154 rotating relative to the FL planet gears 156, and the FL ring gear 160 engaged with the first layshaft ring engagement gear 72.

The first clutch 74 is disposable in a clutch-engaged configuration or in a clutch-disengaged configuration. In the clutch-engaged configuration, the first clutch 74 transfers rotational drive from the first layshaft 82 to the FL sun gear 154. The FL sun gear 154, in turn, drives the FL planet gears 156 and the FL planet gears 156 drive the FL carrier 158. The FL carrier 158 is connected to the first layshaft ring engagement gear 72. Hence, rotation of the FL carrier 158 causes rotation of the first layshaft ring engagement gear 72 and the first layshaft ring engagement gear 72 transmits power to the ring gear 60 of the OS epicyclic gear arrangement 42.

In the clutch-disengaged configuration, the first clutch 74 does not transfer rotational drive from the first layshaft 82 to the FL sun gear 154. Hence, in the clutch-disengaged configuration, the first layshaft ring engagement gear 72 may rotate freely.

In the embodiment shown in FIG. 6A, one or more rotational control devices 164 (e.g., Sprag clutches) are configured to allow the FL carrier 158 and connected first layshaft ring engagement gear 72 to rotate in a first direction and to prevent the same from rotating in an opposite second direction. As indicated herein, the first layshaft ring engagement gear 72 is in geared communication with the ring gear 60 of the OS epicyclic gear arrangement 42. The one or more rotational control devices 164 that allow the FL carrier 158 and connected first layshaft ring engagement gear 72 to rotate in a first direction and to prevent the same from rotating in an opposite second direction, therefore also allow the ring gear 60 of the OS epicyclic gear arrangement 42 to rotate in one direction and prevent the same from rotating in an opposite direction.

As stated above, in some embodiments the first layshaft assembly 50 and/or the second layshaft assembly 52 may include a clutch that is disposable in a "clutch-engaged" configuration or in a "clutch-disengaged" configuration. An example of a clutch (e.g., first clutch 74) is shown in FIG. 3 and described herein.

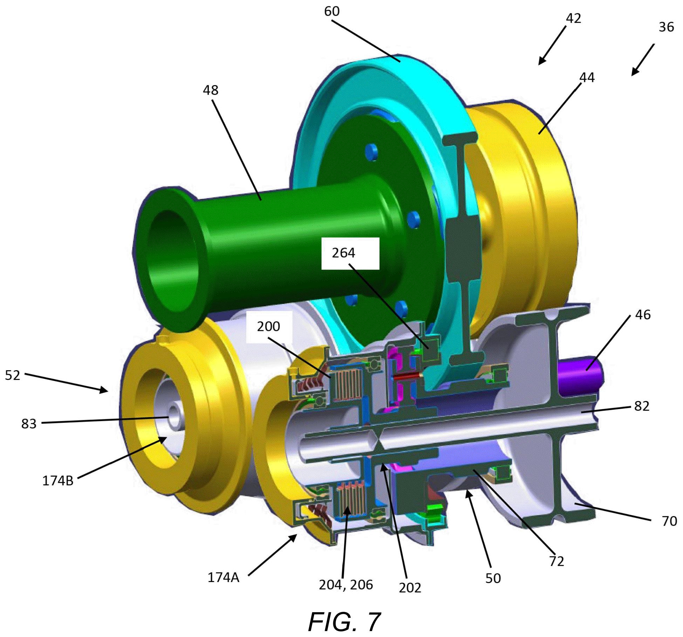

FIG. 7 diagrammatically illustrates a present invention two-speed gearbox 36 with a first multiplate clutch 174A engaged with the first lay shaft 82 and a second multiplate clutch 174B engaged with the second layshaft 83. As stated herein, the present invention does not require each layshaft be engaged with a clutch. To illustrate this aspect of the present invention, the first multiplate clutch 174A engaged with the first layshaft 82 is described hereinafter. The second multiplate clutch 174B may be configured the same as the first multiplate clutch 174A, or may be configured differently.

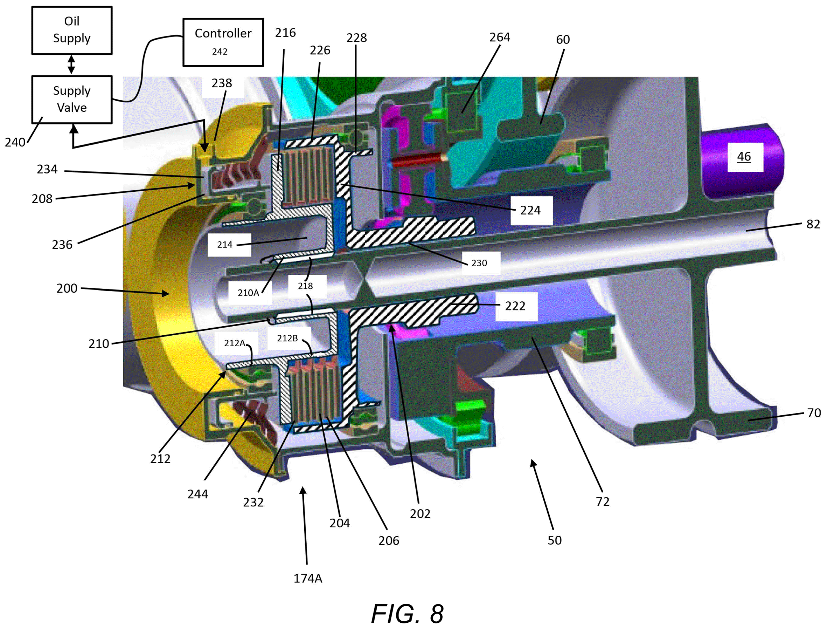

Still referring to FIG. 7, a two-speed gearbox 36 with a first multiplate clutch 174A embodiment like that shown in FIG. 7 may include a rotational control device 264 (e.g., a Sprag clutch) configured to allow the ring gear 60 to rotate in a first direction and to prevent the ring gear 60 from rotating in an opposite second direction as described herein; e.g., see FIGS. 3 and 7. The first layshaft input gear 70 is engaged with the first layshaft 82. For example, in the embodiment shown in FIGS. 7 and 8, the first layshaft input gear 70 and the first layshaft 82 are integral with one another.

The first multiplate clutch 174A includes an axially translating carriage ("AT carriage 200"), an axially non-translating carriage ("NT carriage 202"), a plurality of clutch discs 204, a plurality of clutch plates 206, and an linear actuator 208 (see FIG. 8).

Referring to FIG. 8, the AT carriage 200 has an AT hub 210, a collar 212, a base 214, and a collar flange 216. The collar 212 is generally cylindrical and is disposed radially outside of the AT hub 210. The base 214 extends radially between the collar 212 and the AT hub 210 at one axial end of the AT carriage 200. The collar 212 and the AT hub 210 are concentric with one another. The AT hub 210 includes an AT central bore 210A configured to receive the first layshaft 82. The engagement between the AT hub 210 and the first layshaft 82 is such that the AT hub 210 and the first layshaft 82 are rotationally coupled and the AT hub 210 is permitted to axially translate relative to the first layshaft 82. In the example shown in FIG. 8, the AT hub 210 and the first layshaft 82 are engaged with one another in a splined arrangement 218. The collar 212 includes a first collar segment 212A and a second collar segment 212B. The collar flange 216 extends radially outward at an axial position between the first and second collar segments 212A, 212B; i.e. the collar flange 216 axially separates the first and second collar segments 212A, 212B. A bearing is disposed between the first collar segment 212A and the linear actuator 208. As will be detailed herein, the clutch discs 204 and the clutch plates 206 are disposed radially outside of the second collar segment 212B.

The NT carriage 202 includes an NT hub 222, a web 224, a forward flange 226, and a bearing flange 228. The NT hub 222 is rotationally coupled with the first layshaft ring engagement gear 72 and is engaged with the rotational control device 264 (e.g., a Sprag clutch). The NT hub 222 includes an NT central bore 230 configured to receive the first layshaft 82. The NT central bore 230 permits the first layshaft 82 to rotate relative to the NT hub 222. The web 224 is disposed at an axial end of the NT hub 222 and extends radially outward from the NT hub 222 to a distal end. The forward flange 226 extends axially away from the distal end of the web 224, in a direction wherein it overlaps at least a portion of the second collar segment 212B; i.e., is disposed radially outside of at least a portion of the second collar segment 212B.

As can be seen in FIG. 8, the clutch discs 204 and the clutch plates 206 are disposed in an annular disc/plate cavity 232. The web 224 of the NT carriage 202 and the collar flange 216 of the AT carriage 200 form axial boundaries of the disc/plate cavity 232, and the forward flange 226 of the NT carriage 202 and the second collar segment 212B of the AT carriage 200 form radial boundaries of the disc/plate cavity 232.

The linear actuator 208 is hydraulically powered. The linear actuator 208 includes a piston 234 disposed within an annular cavity 236. A fluid port 238 provides fluid access to the annular cavity 236. The piston 234 includes a cap end and a distal end. The cap end is disposed adjacent the fluid port 238 and the distal end is disposed contiguous with the collar flange 216. The piston 234 is axially translatable within the annular cavity 236 and is disposable in a deployed state or in a non-deployed state. As stated herein, a bearing is disposed between the first collar segment 212A and the piston 234 of the linear actuator 208.

The hydraulically powered linear actuator 208 may use engine oil utilized within the gas turbine engine 20 as the working fluid. To facilitate the description herein the fluid will be referred to as engine oil, but the present invention is not limited thereto.

The present invention may utilize appropriate valving and other fluid control devices to control the flow of fluid into and out of the linear actuator 208. FIG. 8 diagrammatically illustrates a supply valve 240 in fluid communication with a fluid supply (labeled as "Oil Supply" in FIG. 8) utilized within the linear actuator 208. The Oil Supply (which may include a pump to increase the pressure of the oil) provides the oil at a pressure that is adequate to actuate the first multiplate clutch 174A. The supply valve 240 is a controllable (e.g., using a controller 242, or the like) between an open state that allows fluid flow therethrough and a closed state that does not allows fluid flow therethrough.

In some embodiments (like that shown in FIG. 8), the linear actuator 208 includes a return spring 244 that is engaged with the piston 234 to normally bias the piston 234 in the non-deployed state. The term "biased" refers to the spring force produced by the return spring 244 acting against the piston 234 in a direction that resists axial translation of the piston 234 away from the normal position.

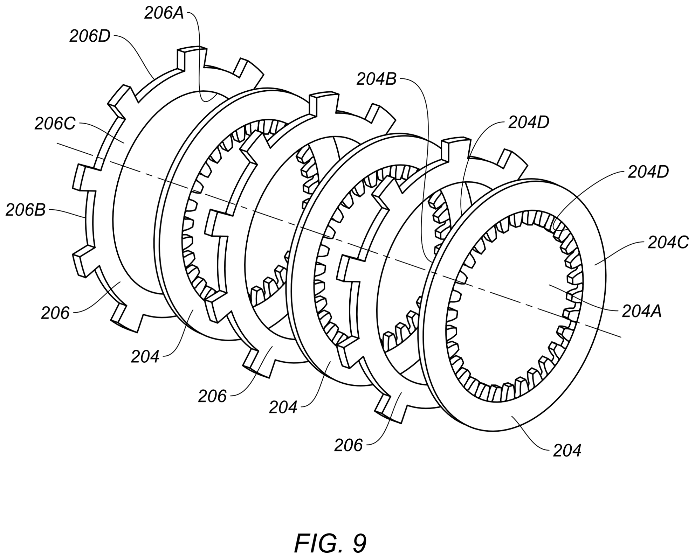

FIG. 9 is an exploded diagrammatic view of a plurality of clutch discs 204 and a plurality of clutch plates 206 in an alternating disc - plate arrangement (e.g., disc 204 / plate 206 / disc 204 / plate 206 / disc 204 / plate 206) disposed in the annular disc/plate cavity 232 as indicated herein.

Each clutch plate 206 (CP) is a planar ring structure with a CP central bore 206A, a first CP side surface 206B, a second CP side surface 206C, and a CP outer radial surface 206D that extends between the first and second CP side surfaces 206B, 206C. The first and second CP side surfaces 206B, 206C are opposite one another. Each clutch plate 206 is configured for mechanical engagement with the AT carriage 200; e.g., mechanical engagement with the second collar segment 212B of the AT carriage 200. Hence, within the first multiplate clutch 174A the AT carriage 200 and the clutch plates 206 are intended to rotate together, while allowing the clutch plates 206 to axially shift position during engagement and disengagement of the clutch 174A. FIG. 9 diagrammatically illustrates clutch plates 206 having tabs extending radially outward from the CP outer radial surface 206D (or conversely slots disposed in the CP outer radial surface 206D) to provide an example of a mechanism for mechanical engagement between the clutch plates 206 and the AT carriage 200.

Each clutch disc 204 (CD) is a planar structure with a CD central bore 204A, a first CD side surface 204B, a second CD side surface 204C, and a CD inner radial surface 204D that extends between the first and second CD side surfaces 204B, 204C. The first and second CD side surfaces 204B, 204C are opposite one another. Each clutch disc 204 is configured for mechanical engagement with the NT carriage 202; e.g., mechanical engagement with the forward flange 226 of the NT carriage 202. Hence, within the first multiplate clutch 174A the NT carriage 202 and the clutch discs 204 are intended to rotate together, while allowing the clutch discs 204 to axially shift position during engagement and disengagement of the clutch. FIG. 9 diagrammatically illustrates clutch discs 204 having tabs extending radially inward from the CD inner radial surface (or conversely slots disposed in the CD inner radial surface) to provide an example of a mechanism for mechanical engagement between the clutch discs 204 and the NT carriage 202.

As described above, in some embodiments the present invention system may include a controller 242 or be implemented using a controller 242; e.g., a "shared controller" dedicated to perform other functionality as well as the functionality described herein. A non-limiting example of a "shared controller" is the electronic engine control (EEC). Regardless of whether a dedicated controller or a "shared controller" is utilized, the controller 242 is in communication with other system components such as the oil supply valve 240, and the like; e.g., to control the operation of the respective system component and/or to receive signals from and/or transmit signals to that system component to perform the functions described herein. The controller 242 may include one or more of any type of computing device, computational circuit, processor(s), CPU, computer, or the like (collectively referred to as a "control device") capable of executing a series of instructions that are stored in memory. In those embodiments wherein the controller 242 includes more than one control device, the control devices may be in communication with one another and may be disposed in any architecture that is capable of achieving the functionality described herein. The instructions may include an operating system, and/or executable software modules such as program files, system data, buffers, drivers, utilities, and the like. The executable instructions may apply to any functionality described herein to enable the inspection system to accomplish the same algorithmically and/or coordination of system components. The controller 242 includes or is in communication with one or more memory devices. The present invention is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 242 may include, or may be in communication with, an input device (not shown) that enables a user to enter data and/or instructions, and may include, or be in communication with, an output device configured, for example to display information (e.g., a visual display, or the like), or to transfer data, etc. Communications between the controller 242 and other system components may be via a hardwire connection or via a wireless connection.

The description below details an example of how the present invention first multiplate clutch system 174A described herein may be operated within the two-speed gearbox 36.

In both the clutch-disengaged configuration (i.e., the first mode / low-speed mode) and the clutch-engaged configuration (i.e., the second mode / high-speed mode), the AT carriage 200 is in coupled rotation with the first layshaft 82. Consequently, the clutch plates 206 that are mechanically engaged with the AT carriage 200 are also in coupled rotation with the first layshaft 82. At the same time, the NT carriage 202 is in coupled rotation with the first layshaft ring engagement gear 72, and the clutch discs 204 that are mechanically engaged with the NT carriage 202 are also in coupled rotation with the first layshaft ring engagement gear 72.

In the clutch-disengaged configuration (i.e., the first mode / low-speed mode), the linear actuator 208 is disposed in a non-deployed state. The return spring 244 biases the linear actuator 208 in the non-deployed state. In the clutch-disengaged configuration, the clutch plates 206 and clutch discs 204 are not frictionally engaged with one another and are, therefore, not rotationally coupled, and the AT carriage 200 and the NT carriage 202 are not rotationally coupled. Hence in the clutch-disengaged configuration, no rotational drive from the first layshaft 82 is delivered to the ring gear 60.

In a clutch-engaged configuration (i.e., the second mode / high-speed mode), pressurized oil from the oil supply is provided to the linear actuator 208 by the supply valve 240 being disposed in an open state. The pressurized oil provides a motive force against the linear actuator piston 234 that is sufficient to overcome the bias force of the return spring 244 and is sufficient to axially translate the AT carriage 200 to cause the clutch plates 206 to frictionally engage with the clutch discs 204. With sufficient maintained force and friction between the clutch plates 206 and the clutch discs 204, the clutch plates 206 and the clutch discs 204 become rotationally coupled. The AT carriage 200 and the NT carriage 202 also become rotationally coupled. Hence in the clutch-engaged configuration, rotational drive from the first layshaft 82 is delivered to the ring gear 60.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the invention may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the invention--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present invention are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. An aircraft propulsion system, comprising:
a thermal engine (20);
a gearbox (36) that includes an input shaft (46), an output shaft (48), an epicyclic gear arrangement (42), a drive gear (44), and a first layshaft assembly (50), wherein the input shaft (46) is driven by the thermal engine (20); and
a multiplate clutch (174A) engaged with the first layshaft assembly (50), wherein:
the epicyclic gear arrangement (42) includes a sun gear (54), a plurality of planet gears (56), and a ring gear (60), wherein the sun gear (54) is connected with the drive gear (44);
the first layshaft assembly (50) extends along a first layshaft rotational axis (68) and includes a first layshaft (82), a first layshaft input gear (70), and a first layshaft ring engagement gear (72);
the first layshaft ring engagement gear (72) is engaged with the ring gear (60), and the first layshaft input gear (70) is engaged with the drive gear (44) and the input shaft (46); and
the multiplate clutch (174A) is disposable in a disengaged configuration wherein the first layshaft ring engagement gear (72) is uncoupled with the first layshaft input gear (70), and in an engaged configuration wherein the first layshaft ring engagement gear (72) is coupled with the first layshaft input gear (70).

2. The aircraft propulsion system of claim 1, wherein the multiplate clutch (174A) includes a first carriage (200), a second carriage (202), a plurality of clutch discs (204), a plurality of clutch plates (206), and a linear actuator (208).

3. The aircraft propulsion system of claim 2, wherein:
the first carriage (FC) (200) includes an FC hub (210) that has an FC central bore (210A) that is configured to receive the first layshaft (82); and
the FC central bore (210A) and the first layshaft (82) are configured such that the first carriage (200) and the first layshaft (82) are rotationally coupled and the first carriage (200) is configured to axially translate relative to the first layshaft (82),
optionally wherein the FC central bore (210A) and the first layshaft (82) are disposed in a splined relationship.

4. The aircraft propulsion system of claim 3, wherein:
the first carriage (200) further includes a collar (212), a base (214), and a collar flange (216); and
the collar (212) is disposed radially outside of the FC hub (210), and the base (214) extends radially between the collar (212) and the FC hub (210).

5. The aircraft propulsion system of claim 4, wherein the collar (212) includes a first collar segment (212A) and a second collar segment (212B) and the collar flange (216) extends radially outward from the collar (212) between the first collar segment (212A) and the second collar segment (212B).

6. The aircraft propulsion system of any of claims 2 to 5, wherein:
the second carriage (SC) (202) includes a SC hub (222) that has a SC central bore (230) that is configured to receive the first layshaft (82); and
the SC central bore (230) and the first layshaft (82) are configured such that the second carriage (202) and the first layshaft (82) are not coupled.

7. The aircraft propulsion system of claim 6 when dependent on claim 5, wherein:
the second carriage further includes a web (224) and a forward flange (226);
the web (224) extends radially outward from the SC hub (222) to a distal end; and
the forward flange (226) extends axially away from the distal end of the web (224), disposed radially outside of at least a portion of the second collar segment (212B).

8. The aircraft propulsion system of claim 7, wherein:
the plurality of clutch discs (204) and the plurality of clutch plates (206) are disposed in an annular disc/plate cavity (232); and
the web (224) and the collar flange (216) form axial boundaries of the disc/plate cavity (232), and the forward flange (226) and the second collar segment (212B) form radial boundaries of the disc/plate cavity (232).

9. The aircraft propulsion system of any of claims 2 to 8, wherein:
each clutch plate of the plurality of clutch plates (206) is mechanically engaged with the first carriage (200), and each clutch disc of the plurality of clutch discs (204) is mechanically engaged with the second carriage (202); and/or
each clutch plate of the plurality of clutch plates (206) is mounted to be axially translatable, and each clutch disc of the plurality of clutch discs (204) is mounted to be axially translatable.

10. The aircraft propulsion system of any of claims 2 to 9, wherein the plurality of clutch discs (204) and the plurality of clutch plates (106) are disposed in an alternating disc - plate arrangement.

11. The aircraft propulsion system of any of claims 2 to 10, wherein the linear actuator (208) is hydraulically powered,
optionally wherein the thermal engine (20) is a gas turbine engine and an engine oil is used to hydraulically power the linear actuator (208).

12. The aircraft propulsion system of any preceding claim, wherein:
the multiplate clutch (174A) includes a or the linear actuator (208) having a piston (234) that is axially translatable between a deployed state and a non-deployed state;
when the multiplate clutch (174A) is disposed in a disengaged configuration, the linear actuator (208) is disposed in the non-deployed state; and
when the multiplate clutch (174A) is disposed in an engaged configuration, the linear actuator (208) is disposed in the deployed state.

13. The aircraft propulsion system of claim 12, wherein the linear actuator (208) further includes a return spring (244) configured to bias the piston (234) towards the non-deployed state.

14. The aircraft propulsion system of claim 12 or 13, wherein the linear actuator (208) is configured so that the piston (234) engages with and causes linear translation of the first carriage (200) toward the second carriage (202) during transition from the multiplate clutch disengaged configuration to the multiplate clutch engaged configuration.

15. The aircraft propulsion system of any of claims 12 to 14, wherein:
in the multiplate clutch disengaged configuration the plurality of clutch discs (204) and the plurality of clutch plates (206) are not rotationally coupled with one another; and/or
in the multiplate clutch engaged configuration the plurality of clutch discs (204) and the plurality of clutch plates (206) are rotationally coupled with one another, and the linear actuator (208) maintains the plurality of clutch discs (204) and the plurality of clutch plates (206) rotationally coupled with one another.
